# EUROPÄISCHE PATENTSCHRIFT

(11) **EP 0 899 593 B1**
(45) Veröffentlichungstag und Bekanntmachung des Hinweises auf die Patenterteilung: **16.03.2005**
(21) Anmeldenummer: 98113366.3
(22) Anmeldetag: 17.07.1998
(51) Int. Cl.: G02B 6/38

(54) **Optische Verbindung**
Optical connection
Connection optique

(30) Priorität: 28.08.1997 DE 19737498
(43) Veröffentlichungstag der Anmeldung: 03.03.1999
(73) Patentinhaber: Deutsche Telekom AG, 53113 Bonn (DE)
(72) Erfinder: Heitmann, Walter, Dr.-Ing., 64401 Gross-Bieberau (DE)

(56) Entgegenhaltungen:
- EP-A- 0 058 461
- US-A- 4 602 847
- RICHTER F: "Superharte dünne Schichten" PHYSIKALISCHE BLATTER, Bd. 52, Nr. 4, April 1996 (1996-04), Seiten 355-358, XP002109022
- HENKING R ET AL: "Ion-beam-sputtering: a deposition process for laser components of the future" LASER UND OPTOELEKTRONIK, APRIL 1996, AT-FACHVERLAG, GERMANY, Bd. 28, Nr. 2, Seiten 43-49, XP002109023 ISSN: 0722-9003

## Beschreibung

Die Erfindung betrifft eine optische Vorrichtung nach dem Oberbegriff des Patentanspruchs 1.

Optische Verbindungen, insbesondere Steckverbindungen sind in der Nachrichtentechnik grundsätzlich bekannt und werden im großen Umfang eingesetzt. Bekannte Stecker mit einem Lichtwellenleiter, zwei Lichtwellenleitern, zum Beispiel zur Hausverkabelung oder EDV-Verkabelung oder mit vier bis vierundzwanzig Lichtwellenleitern werden sowohl zur Datenund Informationsübertragung als auch zur Bildübertragung und Sprachübertragung verwendet. Die optischen Steckverbindungen sind prinzipiell wie folgt aufgebaut: Der Lichtwellenleiter mit einem typischen Außendurchmesser von 125 µm wird im Zentrum eines Stiftes aus Hartmetall oder Keramik fixiert, wobei der Stiftdurchmesser 2,5 mm oder 1,25 mm beträgt. An der Stirnfläche des Stiftes ragt die zu einer Kugelkalotte polierte Endfläche des Lichtwellenleiters etwas hervor. Die Stifte werden über eine zylindrische Hülse mit hoher Präzision zusammengesteckt, sodass der Versatz der Faserkerne weniger als 1 µm beträgt. Das Stecken erfolgt mit einem kleinen Andruck, wodurch die Kugelkalotten in der Mitte abgeflacht werden. Es entsteht bei sauberen Endflächen ein optischer Kontakt mit geringem Einfügeverlust und sehr kleiner Rückreflexion. In T. Shintaku et al. "Highly Stable Physical-Contact Optical Fiber Connectors with Spherical Convex Ends", Journal of Lightwave Technology 11,2(1993)241, ist eine ausführliche Beschreibung der Grundlagen und der Herstellung für optische Steckverbindungen veröffentlicht.

Bei verschiedenen Anwendungen optischer Verbindungen, zum Beispiel in der Messtechnik, bei denen die mechanische Stabilität einer Grenzfläche klein ist, weil sie aus einem relativ weichen Material, wie zum Beispiel Quarzglas, Glas oder Kunststoff besteht, tritt eine störende Veränderung der Transmission ein. Insbesondere bei Anwendungen in der Messtechnik, wenn zur Messung von Faserparametern, zum Beispiel der Dämpfung, die Endfläche einer Faser auf einem optischen Fenster vor einer Lichtquelle oder einem optischen Detektor aufgesetzt wird, ist eine Verbesserung der mechanischen Stabilität der Grenzfläche des optischen Fensters, auf der die Faser aufgesetzt wird, erforderlich. Um störende Reflexionen hierbei zu vermeiden, wird das Fenster im allgemeinen aus dem gleichen Material hergestellt wie die Faser, und die Brechzahlenanpassung zwischen Faserendfläche und Fensteroberfläche durch ein Medium mit gleicher Brechzahl, zum Beispiel Immersionsöl oder -gel, optimiert.

Beim Aufsetzen der Faser auf die Fensteroberfläche kommt es durch Verunreinigungen auf den Grenzflächen wie zum Beispiel durch Staubpartikel oder durch Grate an der gebrochenen Faserendfläche zu Beschädigungen meist Kratzern. Solche Schäden an der Fensteroberfläche in dem Bereich, den das Messlicht durchstrahlt, verfälschen die Messergebnisse und stellen somit ein Problem für die Messtechnik dar.

Der Erfindung liegt die Aufgabe zugrunde, die optische Verbindung zwischen Lichtwellenleitern und optischen Fenstern, insbesondere für die Anwendung in der Messtechnik dahingehend zu verbessern, dass schädliche Transmissionsänderungen vermieden werden, eine höhere Messgenauigkeit und verbesserte Langzeitstabilität erreicht wird.

Die erfindungsgemäße Lösung der Aufgabe ist im Kennzeichen des Patentanspruchs 1 charakterisiert. Konkrete Ausgestaltungen ergeben sich aus den Kennzeichen der Patentansprüche 2 bis 7.

Die mechanische Stabilität der Fensteroberfläche wird wesentlich verbessert, in dem eine harte, dünne Schicht aus Al₂O₃ (Saphir) oder anderen harten ähnlichen Substanzen aufgebracht wird, ohne dass dadurch eine störende Reflexionserhöhung auftritt.

Im nachfolgenden wird die erfindungsgemäße Ausführung, insbesondere ein Anwendungsfall aus der Messtechnik beschrieben. Wenn zur Messung von Faserparametern von Lichtwellenleitern, zum Beispiel der Dämpfung, die Endflächen einer Faser auf einem optischen Fenster vor einer Lichtquelle oder einem optischen Detektor aufgesetzt werden, wird im vorliegenden Falle ein Fenster benutzt, bei dem die mechanische Stabilität der Fensteroberfläche wesentlich verbessert ist. Dies geschieht dadurch, dass eine aufgebrachte harte, sehr dünne Schutzschicht aus Korund (Al₂O₃) oder anderen harten ähnlichen Substanzen besteht. Durch diese Maßnahme erfolgt die optische Verbindung zwischen Lichtwellenleiter bzw. -faser und optischem Fenster ohne störende Erhöhung der Reflexion und ohne Transmissionsveränderungen durch Beschädigung der Fensteroberfläche, wodurch sich wesentlich genauere Messergebnisse erzielen lassen. Es soll allerdings betont werden, dass die Anwendung nicht nur auf solche Messanordnungen beschränkt ist, sondern auf jede optische Kontaktfläche zwischen einer Oberfläche eines optischen Fensters und einer Endfläche eines Lichtwellenleiters bzw. -fasern anwendbar ist.

Als Materialien für die aufzubringende Schutzschicht kommen neben Al₂O₃ alle absorptionsfreien Stoffe mit noch größerer Härte in Frage. Geeignete Oxide sind unter anderem Y₂O₃, Sc₂O₃, ZrO₂ und HfO₂ wie aus der Veröffentlichung von N. Kaiser: "Dünne Schichten für den ultravioletten Spektralbereich", Laser und Optoelektronik 28,2(1996)52, hervorgeht. In der Veröffentlichung von F. Richter: "Superharte dünne Schichten", Physikalische Blätter 52,4 (1996)355" werden eine Anzahl von Substanzen angegeben, wie zum Beispiel Nitride, Boride und Carbide, deren Härte zwischen der von Al₂O₃ und der von Diamant liegt.

Zur Herstellung der Schutzschichten können unter anderem ionengestützte Verfahren, wie in den beiden letztgenannten Veröffentlichungen beschrieben, Ionenstrahl-Zerstäubungsverfahren, wie in der Veröffentlichung von R. Henking et al.: "Ionenstrahl-Zerstäuben: Ein Beschichtungsverfahren für Laserkomponenten der Zukunft", Laser und Optoelektronik 28,2(1996)43, oder das MikroPlasma-Verfahren gemäß der Veröffentlichung von M.A. Scobey et al.: "Passive DWDM components using MicroPlasma optical interference filters", Optical Fiber Conference OFC 1996, Thk 1, Seite 242 bis 243, eingesetzt werden.
Dadurch, dass die Fensteroberflächen mit einer dünnen, absorptionsfreien Schicht aus sehr hartem Material beschichtet sind, erhöht sich die Kratzfestigkeit der Oberfläche des optischen Fensters sehr wesentlich. Die Dicke der Schutzschicht wird dabei so gering bemessen, dass störende Reflexionsverluste durch Brechungszahlunterschiede weitgehend vermieden werden. Die Herstellung der Schutzschicht bzw. das Auftragen der entsprechenden Materialien kann durch ionengestützte Verfahren, Ionenstrahl-Zerstäuben oder durch bekannte MikroPlasma-Verfahren erfolgen. Die Beschichtungsdauer ist wegen der geringen Dicke der Schutzschicht relativ kurz. Die auf das optische Fenster aufgebrachten Faserenden können nun die Oberfläche des optischen Fensters nicht mehr zerkratzen. Die Schutzschichten können auch aus einem absorptionsfreien, anorganischen oder organischen Material großer Härte bestehen, wenn das optische Fenster aus Kunststoff besteht. Die Schutzschicht für ein optisches Fenster oder dergleichen aus Quarzglas kann auch aus Oxiden, Nitriden, Boriden oder Carbiden bestehen. Die optische Dicke der Schutzschicht liegt zwischen 1/1000 und 1/10 der Betriebswellenlänge. Es sei noch einmal darauf hingewiesen, dass es sehr vorteilhaft ist, zur Vermeidung störender Reflexionsverluste durch Brechzahlunterschiede die Dicke der Schutzschicht so gering wie nur möglich zu bemessen. Als weiteres Material für die Schutzschicht sind zum Beispiel die Oxide Y₂O₃, Sc₂O₃, ZrO₂ und HfO₂ geeignet.

Dadurch, dass nunmehr die Oberfläche des optischen Fensters mit einer sehr harten, reflexionsfreien und dünnen Schutzschicht versehen ist, können Verunreinigungen beim Aufsetzen der Faser auf die Grenzfläche oder Grate an der gebrochenen Faserendfläche nicht mehr zu Beschädigungen führen.

## Patentansprüche

1. Optische Vorrichtung bestehend aus einem optischen Fenster und einem Lichtleiter mit einem Endflächenkontakt für das optische Fenster, **dadurch gekennzeichnet,**
**dass** die Oberfläche des optischen Fensters mit einer dünnen, absorptionsfreien Schutzschicht mit einer Härte, die größer ist als die des Lichtwellenleitermaterials und deren optische Dicke zwischen 1/1000 und 1/10 der Betriebswellenlänge bzw. des Messbereichs gegenüber der Betriebswellenlänge des Lichtwellenleiters liegt, versehen ist.

2. Optische Vorrichtung nach dem Oberbegriff des Patentanspruchs 1, **dadurch gekennzeichnet, dass** die Lichtwellenleiter aus Quarzglas bestehen und die Schutzschicht des optischen Fensters aus Korund (Al₂O₃).

3. Optische Vorrichtung nach Patentanspruch 1, **dadurch gekennzeichnet, dass** die Lichtwellenleiter aus Quarzglas bestehen und die Schutzschicht für das optische Fenster aus Oxiden, Nitriden, Boriden oder Carbiden.

4. Optische Vorrichtung nach einem der vorangehenden Patentansprüche, **dadurch gekennzeichnet, dass** das optische Fenster aus Quarzglas, Mehrkomponentenglas oder Kunststoff besteht und mit einer Schutzschicht aus einem absorptionsfreien, anorganischen oder organischen Material größerer Härte versehen ist.

5. Optische Vorrichtung nach einem der vorangehenden Patentansprüche, **dadurch gekennzeichnet, dass** die Oberfläche des optischen Fensters aus einer dünnen, absorptionsfreien Schutzschicht aus sehr hartem Material besteht, wobei die Dicke der Schutzschicht zur Vermeidung störender Reflexionsverluste durch Brechzahlunterschiede entsprechend gering bemessen ist.

6. Optische Vorrichtung nach einem der vorangehenden Patentansprüche, **dadurch gekennzeichnet, dass** die Schutzschicht des optischen Fensters aus Oxiden, wie zum Beispiel Y₂O₃, Sc₂O₃, ZrO₂ und HfO₂ besteht.

7. Optische Vorrichtung nach einem der vorangehenden Patentansprüche, **dadurch gekennzeichnet, dass** zur Herstellung der Schutzschicht ionengestützte Verfahren oder Ionenstrahl-Zerstäubungsverfahren oder MikroPlasma-Verfahren angewendet werden.

## Claims

1. Optical device consisting of an optical window and an optical waveguide with an end face contact for the optical window, **characterized in that**
the surface of the optical window is provided with a thin, non-absorptive protective layer of a hardness greater than that of the optical waveguide material, the optical thickness of said protective layer being between 1/1000 and 1/10 of the operating wavelength or measuring range in comparison with the operating wavelength of the optical waveguide.

2. Optical device according to the preamble of claim 1, **characterized in that** the optical waveguides are of quartz glass and the protective layer of the optical window is of corundum (Al₂O₃).

3. Optical device according to claim 1, **characterized in that** the optical waveguides are of quartz glass and the protective layer for the optical window is of oxides, nitrides, borides or carbides.

4. Optical device according to any one of the preceding claims, **characterized in that** the optical window is of quartz glass, multi-component glass or plastic and is provided with a protective layer of a non-absorptive, inorganic or organic material of greater hardness.

5. Optical device according to any one of the preceding claims, **characterized in that** the surface of the optical window consists of a thin, non-absorptive protective layer of very hard material, the thickness of the protective layer being appropriately small in order to prevent disturbing reflection losses as a result of differences of refractive index.

6. Optical device according to any one of the preceding claims, **characterized in that** the protective layer of the optical window consists of oxides, such as Y₂O₃, Sc₂O₃, ZrO₂ and HfO₂.

7. Optical device according to any one of the preceding claims, **characterized in that** ion-assisted methods or ion-beam sputtering methods or microplasma methods are used in order to produce the protective layer.

## Revendications

1. Dispositif optique constitué d'une fenêtre optique et d'un guide d'ondes optiques avec un contact de surface terminale pour la fenêtre optique, **caractérisé en ce que** la surface de la fenêtre optique est pourvue d'une fine couche protectrice non absorbante, d'une dureté supérieure à celle du matériau du guide d'ondes optiques et d'une épaisseur optique comprise entre 1/1000 et 1/10 de la longueur d'ondes de signaux ou de la plage de mesure correspondant à la longueur d'ondes de signaux du guide d'ondes optiques.

2. Dispositif optique selon le préambule de la revendication 1, **caractérisé en ce que** les guides d'ondes optiques sont constitués de verre de quartz et la couche protectrice de la fenêtre optique de corindon (Al₂O₃).

3. Dispositif optique selon la revendication 1, **caractérisé en ce que** les guides d'ondes optiques sont constitués de verre de quartz et la couche protectrice de la fenêtre optique d'oxydes, de nitrures, de borures ou de carbures.

4. Dispositif optique selon l'une des revendications précédentes, **caractérisé en ce que** la fenêtre optique est constituée de verre de quartz, de verre multicomposants ou de matière plastique et pourvue d'une couche protectrice en matériau organique ou inorganique non absorbante et de dureté plus élevée.

5. Dispositif optique selon l'une des revendications précédentes, **caractérisé en ce que** la surface de la fenêtre optique est constituée d'une fine couche protectrice non absorbante en matériau très dur, la couche protectrice étant relativement mince pour prévenir des pertes de réflexion perturbatrices dues à des différences d'indices de réfraction.

6. Dispositif optique selon l'une des revendications précédentes, **caractérisé en ce que** la couche protectrice de la fenêtre optique est constituée d'oxydes, comme par exemple de Y₂O₃, Sc₂O₃, ZrO₂ et HfO₂.

7. Dispositif optique selon l'une des revendications précédentes, **caractérisé en ce que**, pour la fabrication de la couche protectrice, des procédés à assistance ionique, des procédés de pulvérisation par faisceau d'ions ou des procédés microplasma sont employés.
